# EUROPEAN PATENT SPECIFICATION

(11) **EP 4 311 707 B1**
(45) Date of publication and mention of the grant of the patent: **13.11.2024**
(21) Application number: 22186974.6
(22) Date of filing: 26.07.2022
(51) Int. Cl.: G06V 40/16, B60K 37/00, G06F 3/14, B60K 35/28, B60K 35/10

(54) **PASSENGER MONITORING SYSTEM**
PASSAGIERÜBERWACHUNGSSYSTEM
SYSTÈME DE SURVEILLANCE DE PASSAGERS

(43) Date of publication of application: 31.01.2024
(73) Proprietor: Volvo Car Corporation, 40531 Göteborg (SE)
(72) Inventor: FEI, Zhennan, 40531 Göteborg (SE); ZHANG, Xuan, 40531 Göteborg (SE)
(74) Representative: Maiwald GmbH

(56) References cited:
- US-A1- 2017 313 248
- US-A1- 2017 330 044
- US-A1- 2022 207 278

## Description

### TECHNICAL FIELD

The present application relates to a passenger monitoring system for a vehicle, a vehicle comprising such a passenger monitoring system, a passenger monitoring method for a vehicle and a computer program element for passenger monitoring in a vehicle.

### BACKGROUND ART

Automated driving technology provides comfort to occupants of a vehicle by taking over operational decisions to propel the vehicle without any human control. Accordingly, a driver of the vehicle may engage in other tasks than driving. An infotainment system is generally integrated in the vehicle to provide information and entertainment visually and audibly to the occupants. Thus, the driver can utilize the infotainment system via a human-machine interface during the vehicle travels in an automated driving mode. As one of the several possible tasks, the driver can actively monitor an ongoing situation inside the vehicle, which may be not visible to the driver.

The document US 2022/207278 A1 discloses a monitoring system which includes a memory configured to store image data and a first camera configured to capture first image data including the activity of a passenger within the vehicle. The electronic control unit is configured to obtain, from the first camera, the first image data including the passenger, determine an activity of the passenger based on the first image data, and determine that the activity of the passenger will be different than a baseline activity of the passenger. The electronic control unit is configured to record and capture, in the memory and using the camera, the first image data for a time period before and after the determination that the activity of the passenger will be different than the baseline activity.

### SUMMARY

Hence, there may be a need to provide an improved passenger monitoring system, which may facilitate a driver to monitor a vehicle cabin during an automated driving mode of the vehicle.

The problem is at least partially solved or alleviated by the subject matter of the independent claims of the present invention, wherein further examples are incorporated in the dependent claims. It should be noted that the invention described in the following apply to the passenger monitoring system according to claim 1, a vehicle comprising such a passenger monitoring system, the passenger monitoring method for a vehicle according to claim 14, and the computer program element for passenger monitoring in a vehicle according to claim 15.

According to the present invention a passenger monitoring system for a vehicle is presented. The passenger monitoring system comprises a human-machine interface unit, a passenger monitoring unit and a control unit. The human-machine interface unit comprises at least a displaying element. The displaying element is arranged facing a user. The passenger monitoring unit is arranged to generate image data of a passenger sitting in the vehicle. The control unit is configured to receive information on a driving mode of the vehicle. The control unit is configured to cause the displaying element to display an image based on the image data generated by the passenger monitoring unit, when an autonomous driving mode is activated.

The passenger monitoring system according to the present invention may provide an integrated monitoring system of a vehicle cabin. In particular, the passenger monitoring system may be able to provide a driver with visual information about the vehicle cabin, even over an area such as a rear seating area of the vehicle, which is generally invisible to the driver. However, a position of the passenger to be monitored is not limited to the rear seating area, but may be any position in the vehicle cabin. Further, the passenger monitoring system may be able to adapt currently monitored situation to improve its monitoring ability and/or assist a decision to be processed to react to the currently monitored situation. Accordingly, safety of the vehicle during travelling can be increased.

The human-machine interface unit may be configured to interact with a user, i.e. the driver. Accordingly, the human-machine interface unit may be able to receive an input from the user and provide an output in response to the received input. Specifically, the human-machine interface unit may be configured to provide information of the passenger to be monitored to the driver.

The human-machine interface unit may adapt one or more user-friendly applications to facilitate communication between the user and the control unit of the vehicle. The human-machine interface unit may allow the user to enter an input via a (touch) screen, a voice control and/or a gesture control. Accordingly, the user may have an easy access to the control unit via the human-machine interface unit. The human-machine interface unit may be a part of an infotainment system of the vehicle. Accordingly, the passenger monitoring system may not require any new components in the vehicle, but apply the infotainment system, which is generally integrated in the vehicle.

The displaying element of the human-machine interface unit may be arranged in a driver's visual field. Accordingly, the displaying element may be arranged at a front side of the driver. For instance, the displaying element may be integrated in a Center Stack Display (SCD), Head Up Display (HUD), Drivers Information Module (DIM) and/or Infotainment Head Unit (IHU). However, in case the driver may be able to adjust a driver's seat depending on a level of the autonomous driving mode, the displaying element may be arranged such that the displaying element is positioned in a field of driver's view, e.g. facing the driver or the user, allowing a comfortable monitoring.

The passenger monitoring unit may comprise at least one optical image sensor such as a camera. The optical image sensor may be arranged at the position, where the passenger and/or a passenger seat of the passenger may be reliably monitored. For instance, the optical image sensor may face the passenger and/or the passenger seat to be monitored. The passenger monitoring unit may be configured to capture at least one image of the passenger and generate image data. In other words, the passenger monitoring unit, particularly the optical image sensor, may be also able to generate photo image data and/or video image data.

The control unit may be an electronic control unit (ECU). The control unit may include, for example, one or more central processing units (CPUs), graphics processing units (GPUs) dedicated to performing calculations/transactions and/or other processing devices. The control unit may be able to communicate, control and/or retrieve information from the passenger monitoring unit via a wired or wireless connection.

The control unit may be adapted to communicate with a drive pilot unit of the vehicle, which may be configured to determine a driving mode and/or perform the determined driving mode. Specifically, the control unit may receive information indicating the driving mode such as manual, automated driving (AD) and/or advanced driver assistance system (ADAS).

The control unit may be further configured to decide if it is safe to display the image data generated by the passenger monitoring unit on the displaying element of the human-machine interface with respect to the driving mode of the vehicle. The driving mode of the vehicle may be defined according to levels of autonomous driving from level 0 to level 5. For instance, the control unit may classify level 3 (conditional driving automation) to level 5 (full driving automation) as a safe driving mode for displaying the captured image. Hence, the expression "autonomous driving mode is activated" may be understood such that the level of the autonomous driving mode may be changed into the said range of the autonomous driving level.

Thus, when the control unit identifies the safe driving mode, the control unit may allow the displaying element to display the passenger image based on the image data. In other words, the displaying element may display the passenger to be monitored, when the autonomous driving mode is activated. Still in other words, the control unit may turn on the displaying element to display the passenger image, when the vehicle is operated within an operational design domain.

In an example, the autonomous driving mode may be an unsupervised autonomous driving mode and the control unit may allow the displaying unit to display the passenger only when the vehicle is operated under the unsupervised autonomous driving mode, which may correspond to level 4 or level 5 of the autonomous driving.

In an example, the control unit is further configured to turn off the image of the passenger shown on the displaying element, when the autonomous driving mode is deactivated, and the passenger monitoring unit is configured to continue generating the image data of the passenger.

The term "deactivated" may be understood such that the level of the autonomous driving mode may be changed into a supervised driving mode. The control unit may be adapted to continuously communicate with the drive pilot unit of the vehicle to receive the ongoing information on the driving mode of the vehicle. As soon as the level of the autonomous driving level is under 3, the control unit may turn off the displaying unit to stop displaying the monitoring image of the passenger.

However, even though the displaying element changes its content from the passenger image due to the changed driving mode, the passenger monitoring unit may continue monitoring the passenger and generating respective image data. Accordingly, safety of the vehicle can be improved.

In an example, the control unit is further configured to store the image data generated by the passenger monitoring unit in a storage medium element. The passenger monitoring system may be coupled with an external storage medium element. Additionally or alternatively, the storage medium element may be integrated in the passenger monitoring system. The control unit may be adapted to transfer data from the passenger monitoring unit to the data storage medium to store the captured image data via a wired or wireless connection.

The storage medium element may comprise internal to a computing device, such as a computer's SSD, or a removable device such as an external HDD or universal serial bus (USB) flash drive. There are also other types of medium element, including magnetic tape, compact discs (CDs) and non-volatile memory (NVM) cards. The storage medium element may be also a cloud-based data storage element.

In an example, the human-machine interface unit is configured to receive a user's input to tag the displayed image and/or display an image of the previously generated image data of the passenger. The human-machine interface unit may be adapted to receive the user's input regarding handling the captured image. The input may be entered to the human-machine interface unit via the touch control, the voice control and/or the gesture control of the user. The user's input may comprise at least one of tagging, recording, replaying the image currently captured and replaying the image stored in the storage medium element.

In an example, the human-machine interface unit further comprises an audio element, and the control unit is configured to generate an audio message via the audio element to the user. The audio element may be adapted to receive a voice input of the user and/or provide an audio output. Preferably, the audio element may be configured to generate an audio message to the user when the autonomous driving mode is deactivated. Accordingly, when the autonomous driving mode is deactivated and the displaying element stops displaying the monitoring image captured by the passenger monitoring unit, the control unit is able to allow the human-machine interface unit to generate the audio message to inform the user and/or the driver about the change of the driving mode.

In an example, the passenger monitoring unit comprises a vision-based perception element, and the vision-based perception element is configured to recognize at least one specific pattern of the passenger. The vision-based perception element may be adapted to identify a typical behavior, motion, state, pose, gesture, emotion and/or facial expression of the passenger to be monitored. The vision-based perception element may be further adapted to recognize a different pattern of the behavior, motion, state, pose, gesture, emotion and/or facial expression of the passenger by comparing the currently captured image data with the image data stored in the storage medium element.

In an example, the vision-based perception element is configured to analyze a countenance of the passenger in the image data generated currently based on the image data stored in the storage medium element. The passenger monitoring unit may be able to recognize a pattern change of the countenance of the passenger in the image data, which is currently generated by the optical image sensor and compare with the image data stored in the storage medium element. When analyzing the countenance of the passenger, the vision-based perception element may also incorporate the user's input such as a tag. The pattern change and/or the analysis of the countenance of the passenger may be related to the emotion and/or the facial expression of the passenger.

In an example, the vision-based perception element is further configured to identify a behavior change of the passenger based on the image data stored in the storage medium element. The passenger monitoring unit may be able to recognize the behavior change of the passenger in the image data, which is currently generated by the optical image sensor, based on the pattern change, i.e. by comparing with the image data stored in the storage medium element. The pattern change directing to the behavior change of the passenger may be related to the motion, the gesture and/or the pose of the passenger to be monitored.

In an example, the control unit is configured to generate the audio message via the audio element to the user, when the countenance and/or the behavior change signifies a specific event of the passenger. The vision-based perception element may be able to identify a remarkable change of the passenger's state based on the countenance analysis and/or the behavior change by applying the machine learning. The remarkable change of the passenger's state may be, for instance, falling asleep, waking up, getting bored, getting tense, changing position, etc. The generation of the audio message may be configurable such that one or more remarkable changes may be performed by default. For instance, user may be able to set up the remarkable changes, which can be classified as default, via the human-machine interface unit.

Such specific event may be tagged or denoted by the user and/or identified by the machine learning. Accordingly, if the passenger monitoring unit, preferably the vision-based perception element, recognizes a remarkable change of the state of the passenger, the passenger monitoring unit may provide the control unit such information in order to signal the specific event to the user and/or the driver. Such signal may be provided by means of an audio message via the audio element of the human-machine interface unit and/or a visual sign or text via the displaying element of the human-machine interface unit to awake the user's attention.

In an example, the control unit is further configured to send one or more images displayed on the displaying element to an external device via a wireless network element. The control unit may be able to identify or decide, which image data may be interesting or attractive to the user based on the user's input and/or the identified specific event. If the control unit identifies the specific event of the passenger, which may be interesting to the user, the control unit may send such image data to the external device of the user, such as a mobile device, over the air. Additionally or alternatively, the user may be also capable to select and transmitting the image data via the human-machine interface unit.

The wireless network element may be configured to communicate with an external computing device over the air. The wireless network element may comprise LTE, 5G, Wi-Fi, Bluetooth, NFC, etc. The control unit may thus transmit the selected image data to the external device, which may be any network-compatible devices such as a smartphone, a smartwatch, a tablet, a computer, etc. The external device may be also a cloud-based data storage element. Accordingly, the user may have an easy access to the selected image and/or video clip anywhere.

In an example, the passenger monitoring unit is configured to monitor a child. The passenger to be monitored may be a baby or a child sitting in a child car seat. Specifically, in case of an infant carrier car seat, the driver may have difficulty to safely monitor the baby. In such a case, the passenger monitoring unit, in particular the optical image sensor or the camera may be arranged to reliably generate image data of the baby.

In an example, the passenger monitoring unit is configured to monitor a disabled person aided by an equipment. The passenger to be monitored may be a person, who may require an assistance equipment such as a wheelchair, respiratory equipment, etc. The passenger monitoring unit may be adapted to assist monitoring such disabled person or infirm person sitting in the vehicle.

In an example, the passenger monitoring unit may be also configured to monitor one or more pets travelling in the vehicle.

According to the present invention, a vehicle is presented. The vehicle comprises a passenger monitoring unit as described above. The vehicle may further comprises a drive pilot unit, which may communicate with the control unit of the passenger monitoring system to control turning-on and/or -off of a displaying element of a passenger monitoring unit based on a driving mode of the vehicle. For instance, the control unit may allow the displaying element to show an image based on the image data generated by the passenger monitoring unit, when an autonomous driving mode is activated. Further, the control unit may prompt the displaying element to be turned off or at least change from a passenger monitoring mode to a general information mode providing ongoing operational information of the vehicle, when the autonomous driving mode is deactivated.

According to the present invention, a passenger monitoring method is presented. The method comprises the steps of:
- receiving information on a driving mode of the vehicle,
- generating image data of a passenger, and
- displaying an image based on the image data generated by a passenger monitoring unit in a displaying element, when an autonomous driving mode is activated.
A human-machine interface unit comprises at least the displaying element.

According to the present invention, a computer program element is presented. The computer program element is configured for passenger monitoring in a vehicle as described above, which, when being executed by a processing element, is adapted to perform the method steps of a method claim as described above.

According to the present invention, one or more computer storage media may be presented. The computer storage media may be encoded with instructions that, when executed by one or more computers, cause the one or more computers to perform the operations of the respective method as described above.

The computer storage media may comprise at least one memory device in any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by the control unit.

According to the present invention, a computer system may be also presented. The computer system may comprise one or more computer storage media as described above, and one or more computers for executing the instructions.

It should be noted that the above examples may be combined with each other irrespective of the aspect involved. Accordingly, the method may be combined with structural features and, likewise, the system may be combined with features described above with regard to the method.

These and other examples of the present disclosure will become apparent from and elucidated with reference to the embodiments described hereinafter.

### BRIEF DESCRIPTION OF DRAWINGS

Examples according to the present disclosure will be described in the following with reference to the following drawings.
- Fig. 1: shows schematically and exemplarily an example of a vehicle comprising a passenger monitoring system according to the present disclosure.
- Fig. 2: shows schematically and exemplarily an example of a flow chart of a method for passenger monitoring according to the present disclosure.

### DESCRIPTION OF EXAMPLES

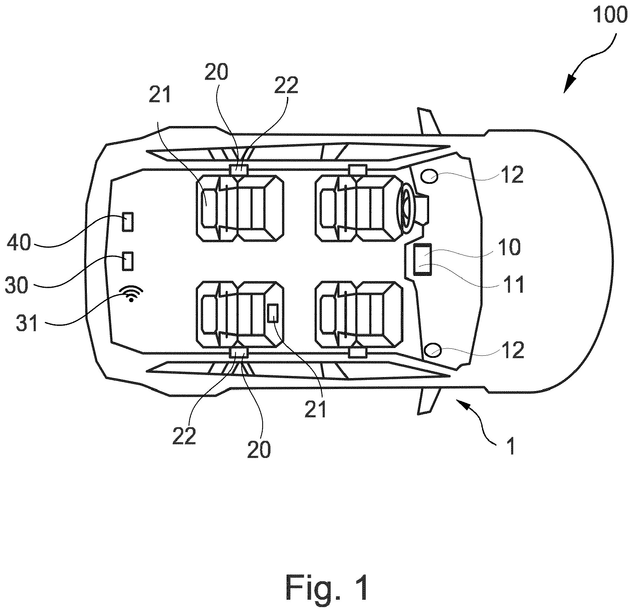

Fig. 1 shows a passenger monitoring system 1 for a vehicle 100. The passenger monitoring system 1 is configured to monitor at least one passenger, for instance a child sitting in a child seat and or a disabled person aided by an equipment. The passenger monitoring system 1 ensures a safe monitoring of the passenger. The passenger monitoring system 1 comprises a human-machine interface unit 10, a passenger monitoring unit 20 and a control unit 30.

The human-machine interface unit 10 comprises at least a displaying element 11. The displaying element 11 is arranged facing a user (not shown). The human-machine interface unit 10 further comprises an audio element 12. The human-machine interface unit 10 is able to receive an input from the user and provide an output in response to the received input. For instance, the human-machine interface unit 10 is able to receive a user's input to tag a displayed image on the displaying element 11 and/or display an image of the previously generated image data of the passenger.

The passenger monitoring unit 20 is arranged to generate image data of a passenger (not shown) sitting in the vehicle 100. The passenger monitoring unit 20 comprises at least one optical image sensor 21 adapted to generate image data of the passenger to be monitored. The control unit 30 is also configured to store the image data generated by the passenger monitoring unit 20 in a storage medium element 40 via a wired or wireless connection.

The passenger monitoring unit 20 further comprises a vision-based perception element 22 configured to recognize at least one specific pattern of the passenger in the image captured by the optical image sensor 21. For instance, the vision-based perception element 22 is able to analyze a countenance of the passenger in the currently generated image data based on the image data stored in the storage medium element 40. The vision-based perception element 22 is further able to identify a behavior change of the passenger based on the image data stored in the storage medium element 40.

The control unit 30 is configured to receive information on a driving mode of the vehicle 100. The control unit 30 is configured to cause the displaying element 11 to display an image based on the image data generated by the passenger monitoring unit 20, when an autonomous driving mode is activated. The control unit 30 is further configured to turn off the monitoring image of the passenger on the displaying element 11, when the autonomous driving mode is deactivated. Even though the displaying element does not display the ongoing monitoring image data, the passenger monitoring unit 20 continues generating the image data of the passenger.

The control unit 30 is also able to generate an audio message via the audio element 12 to the user. Particularly, the control unit 30 is configured to generate an audio message via the audio element 12 to the user, when the countenance and/or the behavior change signifies a specific event of the passenger.

The control unit 30 is further configured to send one or more images displayed on the displaying element 11 to an external device (not shown) via a wireless network element 31. The control unit 30 may be able to identify or decide, which image data may be interesting or attractive to the user based on the user's input and/or the identified specific event.

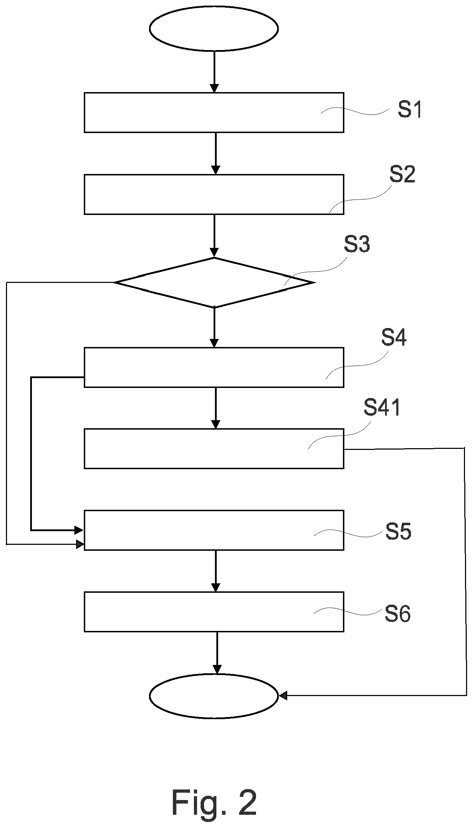

Fig. 2 shows a flow chart of a passenger monitoring method. The passenger monitoring method is performed not necessarily in this order. The method comprises the steps of

| | |
|---|---|
| S1: | receiving information on a driving mode of the vehicle, |
| S2: | generating photo image data or video image data of the passenger to be monitored, |
| S3: | checking if an autonomous driving mode is activated, |
| S4: | displaying an image based on image data generated by a passenger monitoring unit in a displaying element, |
| S41: | receiving a user's input to tag or record the displayed image, |
| S5: | recognizing at least one specific pattern of the passenger, and |
| S6: | generating an audio massage to the user. |

If it is confirmed in the step S3 that the autonomous driving mode is deactivated, the specific pattern reorganization S5 is to be maintained without displaying the image on the displaying element.

While the invention has been illustrated and described in detail in the drawings and description, such illustration and description are to be considered illustrative or exemplary and not restrictive. The invention not limited to the disclosed examples.

## Claims

1. A passenger monitoring system (1) for a vehicle (100), comprising
- a human-machine interface unit (10),
- a passenger monitoring unit (20), and
- a control unit (30),
the human-machine interface unit (10) comprising at least a displaying element (11),
the displaying element (11) being arranged facing a user,
the passenger monitoring unit (20) being arranged to generate image data of a passenger sitting in the vehicle (100),
the control unit (30) being configured to receive information on a driving mode of the vehicle (100), and
the system is **characterised in that**
the control unit (30) being configured to cause the displaying element (11) to display an image based on the image data generated by the passenger monitoring unit (20), when an autonomous driving mode is activated.

2. The passenger monitoring system (1) according to claim 1, the control unit (30) being further configured to turn off the image of the passenger on the displaying element (11), when the autonomous driving mode is deactivated, and the passenger monitoring unit (20) being configured to continue generating the image data of the passenger.

3. The passenger monitoring system (1) according to claim 1 or 2, the control unit (30) being further configured to store the image data generated by the passenger monitoring unit (20) in a storage medium element.

4. The passenger monitoring system (1) according to any of the preceding claims, the human-machine interface unit (10) being configured to receive a user's input to tag the displayed image and/or display an image of the previously generated image data of the passenger.

5. The passenger monitoring system (1) according to any of the preceding claims, the human-machine interface unit (10) further comprising an audio element (12), and the control unit (30) being configured to generate an audio message via the audio element (12) to the user.

6. The passenger monitoring system (1) according to any of the preceding claims, the passenger monitoring unit (20) comprising a vision-based perception element (22), and the vision-based perception element (22) being configured to recognize at least one specific pattern of the passenger.

7. The passenger monitoring system (1) according to the preceding claim, the vision-based perception element (22) being configured to analyze a countenance of the passenger in the image data generated currently based on the image data stored in the storage medium element (40).

8. The passenger monitoring system (1) according to claim 6 or 7, the vision-based perception element (22) being further configured to identify a behavior change of the passenger based on the image data stored in the storage medium element (40).

9. The passenger monitoring system (1) according to any of the preceding claims, the control unit (30) being configured to generate the audio message via the audio element (12) to the user, when the countenance and/or the behavior change signifies a specific event of the passenger.

10. The passenger monitoring system (1) according to any of the preceding claims, the control unit (30) being further configured to send one or more images displayed on the displaying element (11) to an external device via a wireless network element (31).

11. The passenger monitoring system (1) according to any of the preceding claims, the passenger monitoring unit (20) being configured to monitor a child sitting in a child seat.

12. The passenger monitoring system (1) according to any of the preceding claims, the passenger monitoring unit (20) being configured to monitor a disabled person aided by an equipment.

13. A vehicle (100) comprising a passenger monitoring system (1) according to any of the preceding claims 1 to 12.

14. A passenger monitoring method for a vehicle (100), comprising
- receiving (S1) information on a driving mode of the vehicle (100),
- generating (S2) image data of a passenger, and
- displaying (S4) an image based on the image data generated by a passenger monitoring unit (20) in a displaying element (11), when an autonomous driving mode is activated,
a human-machine interface unit (10) comprising at least the displaying element (11).

15. A computer program element for passenger monitoring in a vehicle (100) according to claim 13, which, when being executed by a processing element, being adapted to perform the method steps according to claim 14.

## Patentansprüche

1. Fahrgastüberwachungssystem (1) für ein Fahrzeug (100), das Folgendes umfasst:
eine Mensch-Maschine-Schnittstelleneinheit (10),
eine Fahrgastüberwachungseinheit (20), und
eine Steuereinheit (30), wobei die Mensch-Maschine-Schnittstelleneinheit (10) zumindest ein Anzeigeelement (11) umfasst, wobei das Anzeigeelement (11) einem Benutzer zugewandt angeordnet ist, die Fahrgastüberwachungseinheit (20) zum Erzeugen von Bilddaten eines in dem Fahrzeug (100) sitzenden Fahrgastes ausgebildet ist, die Steuereinheit (30) eingerichtet ist, um Informationen über einen Fahrmodus des Fahrzeugs (100) zu empfangen, und das System **dadurch gekennzeichnet ist, dass** die Steuereinheit (30) eingerichtet ist, um das Anzeigeelement (11) zu veranlassen, ein Bild auf der Grundlage der von der Fahrgastüberwachungseinheit (20) erzeugten Bilddaten anzuzeigen, wenn ein autonomer Fahrmodus aktiviert ist.

2. Das Fahrgastüberwachungssystem (1) nach Anspruch 1, wobei die Steuereinheit (30) weiterhin eingerichtet ist, um das Bild des Fahrgastes auf dem Anzeigeelement (11) auszuschalten, wenn der autonome Fahrmodus deaktiviert wird, und die Fahrgastüberwachungseinheit (20) weiterhin ausgebildet ist, um Bilddaten des Fahrgastes zu erzeugen.

3. Das Fahrgastüberwachungssystem (1) nach Anspruch 1 oder 2, wobei die Steuereinheit (30) weiterhin eingerichtet ist, um die von der Fahrgastüberwachungseinheit (20) erzeugten Bilddaten in einem Speichermedium zu speichern.

4. Das Fahrgastüberwachungssystem (1) nach einem der vorhergehenden Ansprüche, wobei die Mensch-Maschine-Schnittstelleneinheit (10) eingerichtet ist, um eine Benutzereingabe zum Markieren des angezeigten Bildes und/oder zur Anzeige eines Bildes der zuvor erzeugten Bilddaten des Fahrgastes zu empfangen.

5. Das Fahrgastüberwachungssystem (1) nach einem der vorhergehenden Ansprüche, wobei die Mensch-Maschine-Schnittstelleneinheit (10) weiterhin ein Audioelement (12) umfasst, und die Steuereinheit (30) eingerichtet ist, um eine Audionachricht über das Audioelement (12) an den Benutzer zu generieren.

6. Das Fahrgastüberwachungssystem (1) nach einem der vorhergehenden Ansprüche, wobei die Fahrgastüberwachungseinheit (20) ein visuelles Wahrnehmungselement (22) umfasst, und das visuelle Wahrnehmungselement (22) eingerichtet ist, um mindestens ein spezifisches Muster des Fahrgastes zu erkennen.

7. Das Fahrgastüberwachungssystem (1) nach dem vorhergehenden Anspruch, wobei das visuelle Wahrnehmungselement (22) eingerichtet ist, um die Mimik des Fahrgastes in den aktuell erzeugten Bilddaten basierend auf den im Speichermedium gespeicherten Bilddaten zu analysieren.

8. Das Fahrgastüberwachungssystem (1) nach Anspruch 6 oder 7, wobei das visuelle Wahrnehmungselement (22) weiterhin eingerichtet ist, um eine Verhaltensänderung des Fahrgastes basierend auf den im Speichermedium gespeicherten Bilddaten zu identifizieren.

9. Das Fahrgastüberwachungssystem (1) nach einem der vorhergehenden Ansprüche, wobei die Steuereinheit (30) eingerichtet ist, um die Audionachricht über das Audioelement (12) an den Benutzer zu generieren, wenn die Mimik und/oder die Verhaltensänderung ein spezifisches Ereignis des Fahrgastes anzeigt.

10. Das Fahrgastüberwachungssystem (1) nach einem der vorhergehenden Ansprüche, wobei die Steuereinheit (30) weiterhin eingerichtet ist, um ein oder mehrere auf dem Anzeigeelement (11) angezeigte Bilder über ein drahtloses Netzwerkelement (31) an ein externes Gerät zu senden.

11. Das Fahrgastüberwachungssystem (1) nach einem der vorhergehenden Ansprüche, wobei die Fahrgastüberwachungseinheit (20) eingerichtet ist, um ein in einem Kindersitz sitzendes Kind zu überwachen.

12. Das Fahrgastüberwachungssystem (1) nach einem der vorhergehenden Ansprüche, wobei die Fahrgastüberwachungseinheit (20) eingerichtet ist, um eine von einem Hilfsmittel unterstützte behinderte Person zu überwachen.

13. Ein Fahrzeug (100), umfassend ein Fahrgastüberwachungssystem (1) nach einem der Ansprüche 1 bis 12.

14. Verfahren zur Überwachung der Fahrgäste eines Fahrzeugs (100), umfassend
das Empfangen (S1) von Informationen über einen Fahrmodus des Fahrzeugs (100),
Erzeugen (S2) von Bilddaten eines Fahrgastes, und
Anzeigen (S4) eines Bildes auf der Grundlage der von einer Fahrgastüberwachungseinheit (20) erzeugten Bilddaten in einem Anzeigeelement (11), wenn ein autonomer Fahrmodus aktiviert ist,
wobei eine Mensch-Maschine-Schnittstelleneinheit (10) zumindest das Anzeigeelement (11) umfasst.

15. Computerprogrammelement zur Fahrgastüberwachung in einem Fahrzeug (100) nach Anspruch 13, das, wenn es von einem Verarbeitungselement ausgeführt wird, dazu eingerichtet ist, die Verfahrensschritte nach Anspruch 14 durchzuführen.

## Revendications

1. Système de surveillance des passagers (1) pour un véhicule (100), comprenant :
- une unité d'interface homme-machine (10),
- une unité de surveillance des passagers (20) et
- une unité de commande (30),
l'unité d'interface homme-machine (10) comprenant au moins un élément d'affichage (11), l'élément d'affichage (11) étant disposé face à un utilisateur,
l'unité de surveillance des passagers (20) étant conçue pour générer des données d'image d'un passager assis dans le véhicule (100),
l'unité de commande (30) étant configurée pour recevoir des informations sur un mode de conduite du véhicule (100), et le système est **caractérisé en ce que**
l'unité de commande (30) est configurée pour que l'élément d'affichage (11) affiche une image sur la base des données d'image générées par l'unité de surveillance des passagers (20) lorsqu'un mode de conduite autonome est activé.

2. Système de surveillance des passagers (1) selon la revendication 1, l'unité de commande (30) étant en outre configurée pour éteindre l'image du passager sur l'élément d'affichage (11) lorsque le mode de conduite autonome est désactivé, et l'unité de surveillance des passagers (20) étant configurée pour continuer à générer les données d'image du passager.

3. Système de surveillance des passagers (1) selon la revendication 1 ou 2, l'unité de commande (30) étant en outre configurée pour stocker les données d'image générées par l'unité de surveillance des passagers (20) dans un élément de support de stockage.

4. Système de surveillance des passagers (1) selon l'une quelconque des revendications précédentes, l'unité d'interface homme-machine (10) étant configurée pour recevoir une entrée d'utilisateur afin de marquer l'image affichée et/ou d'afficher une image des données d'image précédemment générées du passager.

5. Système de surveillance des passagers (1) selon l'une quelconque des revendications précédentes, l'unité d'interface homme-machine (10) comprenant en outre un élément audio (12), et l'unité de commande (30) étant configurée pour générer un message audio via l'élément audio (12) à l'intention de l'utilisateur.

6. Système de surveillance des passagers (1) selon l'une quelconque des revendications précédentes, l'unité de surveillance des passagers (20) comprenant un élément de perception basé sur la vision (22), et l'élément de perception basé sur la vision (22) étant configuré pour reconnaître au moins un motif spécifique du passager.

7. Système de surveillance des passagers (1) selon la revendication précédente, l'élément de perception basé sur la vision (22) étant configuré pour analyser un visage du passager dans les données d'image générées actuellement sur la base des données d'image stockées dans l'élément de support de stockage (40).

8. Système de surveillance des passagers (1) selon la revendication 6 ou 7, l'élément de perception basé sur la vision (22) étant en outre configuré pour identifier un changement de comportement du passager sur la base des données d'image stockées dans l'élément de support de stockage (40).

9. Système de surveillance des passagers (1) selon l'une quelconque des revendications précédentes, l'unité de commande (30) étant configurée pour générer le message audio via l'élément audio (12) à l'intention de l'utilisateur lorsque le visage et/ou le changement de comportement signifie un événement spécifique du passager.

10. Système de surveillance des passagers (1) selon l'une quelconque des revendications précédentes, l'unité de commande (30) étant en outre configurée pour envoyer une ou plusieurs images affichées sur l'élément d'affichage (11) à un dispositif externe via un élément de réseau sans fil (31).

11. Système de surveillance des passagers (1) selon l'une quelconque des revendications précédentes, l'unité de surveillance des passagers (20) étant configurée pour surveiller un enfant assis dans un siège d'enfant.

12. Système de surveillance des passagers (1) selon l'une quelconque des revendications précédentes, l'unité de surveillance des passagers (20) étant configurée pour surveiller une personne handicapée assistée par un équipement.

13. Véhicule (100) comprenant un système de surveillance des passagers (1) selon l'une quelconque des revendications précédentes 1 à 12.

14. Procédé de surveillance des passagers pour un véhicule (100), comprenant les étapes de :
- recevoir (S1) des informations sur un mode de conduite du véhicule (100),
- générer (S2) des données d'image d'un passager et
- afficher (S4) une image sur la base des données d'image générées par une unité de surveillance des passagers (20) dans un élément d'affichage (11) lorsqu'un mode de conduite autonome est activé,
une unité d'interface homme-machine (10) comprenant au moins l'élément d'affichage (11).

15. Élément de programme d'ordinateur pour la surveillance des passagers dans un véhicule (100) selon la revendication 13, qui, lorsqu'il est exécuté par un élément de traitement, est adapté à mettre en œuvre les étapes du procédé selon la revendication 14.
